(19) Europäisches Patentamt
European Patent Office
Office européen des brevets

(11) Publication number : 0 491 483 A1

(12) **EUROPEAN PATENT APPLICATION**

(21) Application number : **91311106.8**

(22) Date of filing : **29.11.91**

(51) Int. Cl.$^5$ : **C08K 5/57,** C08K 5/07, C08K 5/54, C08L 83/04

(30) Priority : **17.12.90 US 628776**

(43) Date of publication of application : **24.06.92 Bulletin 92/26**

(84) Designated Contracting States : **BE DE FR GB NL**

(71) Applicant : **GENERAL ELECTRIC COMPANY
1 River Road
Schenectady, NY 12345 (US)**

(72) Inventor : **Lucas, Gary Morgan
21 Saint Anthony Lane
Scotia, New York 12302 (US)**

(74) Representative : **Pratt, Richard Wilson et al
London Patent Operation G.E. Technical Services Co. Inc. Essex House 12/13 Essex Street
London WC2R 3AA (GB)**

(54) **Adhesion promoter system for one-component RTV silicone compositions.**

(57) Shelf-stable, scavenger-free, room temperature vulcanizable organopolysiloxane compositions having improved primerless adhesion properties are provided, comprising an alkoxy-terminated organopolysiloxane, a diorganotin bis beta-diketonate condensation catalyst, a cyano-functional polyalkoxy silane, an isocyanato-functional alkoxysilane, and a polysiloxane plasticizing fluid comprising monoalkylsiloxy units, dialkoxysiloxy units, and trialkoxysiloxy units.

EP 0 491 483 A1

## Background of the Invention

The present invention relates to one-component, scavenger-free, alkoxy curing room temperature vulcanizable silicone rubber compositions. More particularly, the present invention relates to adhesion promoting systems which improve the primerless adhesion properties of one-component, alkoxy curing room temperature vulcanizable silicone rubber compositions.

Adhesion promoting agents for one-component, alkoxy curing room temperature vulcanizable (RTV) silicone rubber compositions are known in the art. Reference is made, for example, to U.S. Patent Nos. 4,483,973 and 4,528,353 (both to Lucas et al.) and 4,506,058 (Ashby et al.).

The adhesion promoting (i.e., self-bonding) additives disclosed in the patents to Lucas et al. (Lucas) are silanes functionalized by radicals selected from amino, ether, epoxy, isocyanato, cyano, acryloxy, and acyloxy.

The adhesion promoting additives disclosed in the Ashby et al. (Ashby) patent are bis-silyl urea compounds.

Although the adhesion promoting compounds disclosed in the Ashby and Lucas patents are effective, it is continually desirable to provide adhesion promoting systems which impart improved primerless adhesion properties to RTV silicone rubber compositions.

The present invention is based on the discovery that the combination of a cyano-functional polyalkoxysilane, an isocyanato-functional polyalkoxysilane, and a polysiloxane plasticizing fluid comprising monoalkylsiloxy units, dialkoxysiloxy units, and trialkoxysiloxy units (this fluid will sometimes be referred to herein as "MDT" fluid) has a synergistic effect on the primerless adhesion properties of a one-component, alkoxy curing RTV silicone rubber composition. RTV silicone rubber composition containing a cyano-functional polyalkoxysilane, an isocyanato-functional polyalkoxysilane, and an MDT fluid have primerless adhesion properties which are substantially superior to those of RTV silicone rubber compositions containing either a combination of the cyano-functional alkoxysilane and the MDT fluid without the isocyanato-functional alkoxysilane, or a combination of the isocyanato-functional alkoxysilane and the MDT fluid without the cyano-functional alkoxysilane, or a a combination of the isocyanato-functional alkoxysilane and the cyano-functional alkoxysilane without the MDT fluid.

One-component RTV compositions containing a polyalkoxy-terminated polydiorganosiloxane, a tin condensation catalyst, an adhesion promoter, and an MDT fluid are disclosed, for example, in U.S. Patent Nos. 4,670,532; 4,593,085; 4,755,578; 4,731,411; and 4,895,918, all to Lucas et al. (Lucas). The RTV compositions disclosed in the Lucas patents are all scavenger-containing compositions containing a dialkyltin dicarboxylate as the condensation catalyst. The Lucas patents do not disclose or suggest the combination of the MDT fluid with a cyano-functional alkoxysilane and an isocyanato-functional alkoxysilane.

Scavenger-free, one-component RTV compositions containing a polyalkoxy-terminated polydiorganosiloxane, a plasticizer, a dialkyltin-bisdiketonate as the condensation catalyst, and an adhesion promoter which can be a combination of a cyanoalkyltrialkoxysilane and a compound selected from N-trialkoxysilylalkyl-substituted amides and imides, N-mono(trialkoxysilylalkyl)substituted ureas, trialkoxysilylalkyl isocyanurates and mono-(N-trialkoxysilylalkyl)alkylenediamines; are disclosed, for example, in U.S. Patent No. 4,863,992 to Wengrovius et al. (Wengrovius). The plasticizer fluid disclosed in Wengrovius is not an MDT fluid but a trialkylsilyl-terminated polydiorganosiloxane.

## Summary of the Invention

It is a primary object of the present invention to provide a shelf-stable, scavenger-free, one-component RTV silicone composition having improved primerless adhesion properties.

It is another object of the present invention to provide a method for improving the primerless adhesion properties of a one-component RTV silicone composition.

These and other objects are achieved in the present invention.

The present invention provides a one-component room temperature vulcanizable silicone rubber composition having improved primerless adhesion properties, comprising by weight:

(A) 100 parts of an polydiorganosiloxane having a viscosity of from about 100 to about 1,000,000 centipoise at 25°C, wherein the silicon atoms at each polymer chain end is terminated with at least two alkoxy radicals, the organic group being a $C_{(1-15)}$ monovalent hydrocarbon radical;

(B) an effective amount of a diorganotin bis beta-diketonate condensation catalyst having the general formula:

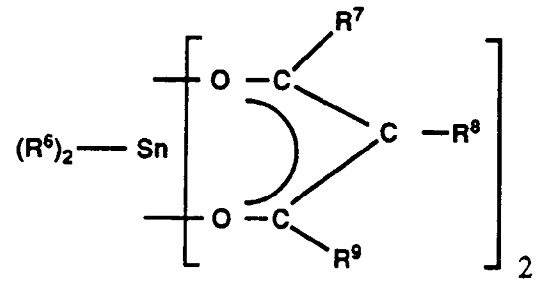

wherein $R^6$ is selected from $C_{(1-18)}$ monovalent hydrocarbon radicals and substituted monovalent hydrocarbon radicals, and $R^7$, $R^8$, and $R^9$ are the same or different monovalent radicals selected from the class consisting of hydrogen, $R^6$, $OR^6$, $-Si(R^6)_3$, $-OSi(R^6)_3$, aryl, acyl, and nitrile;

(C) from about 0.1 to about 3 parts of a cyano-functional polyalkoxy silane having the formula:

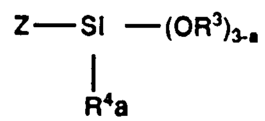

wherein each $R^3$ and $R^4$ is independently a monovalent hydrocarbon or substituted hydrocarbon radicals having from 1 to about 18 carbon atoms, "a" is a number ranging from about 0 to about 2, and Z is a saturated, unsaturated or aromatic cyano-functionalized hydrocarbon radical; and

(D) from about 0.1 to about 2.0 parts of an isocyanato-functional alkoxysilane having the formula:

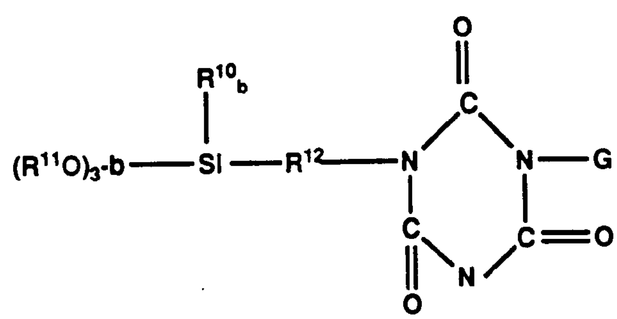

wherein G is selected from $R^{10}$ radicals, radicals of the formula

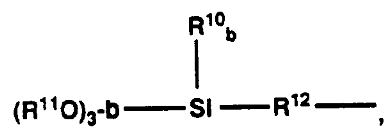

styryl, vinyl, allyl, chloroallyl, and cyclohexenyl radicals, where $R^{10}$ is a $C_{1-8}$ monovalent hydrocarbon radical or cyanoalkyl radical, $R^{11}$ is a $C_{1-8}$ monovalent hydrocarbon radical or cyanoalkyl radical, $R^{12}$ is a $C_{2-12}$ divalent hydrocarbon radical selected from alkylenearylene, alkylene, and cycloalkylene and halogenated alkylenearylene, alkylene and cycloalkylene and where b varies from 0 to 3;

(E) from about 1 to about 50 parts of a polysiloxane plasticizing fluid comprising by weight:

(i) from 5 to 60 mole percent of monoalkylsiloxy units having the formula

$$R^{13}SiO_{3/2}$$

or siloxy units of the formula

$$SiO_{4/2};$$

or a mixture of such units;

(ii) from 1 to 6 mole percent of trialkylsiloxy units having the formula

$$(R^{13})_3SiO_{1/2};$$

(iii) from 34 to 94 mole percent of dialkylsiloxy units having the formula

$$(R^{13})_2SiO_{2/2};$$

wherein $R^{13}$ is a substituted or unsubstituted hydrocarbon radical containing from about 1 to about 13 carbon atoms, the polysiloxane containing from about 0.1 to about 2% by weight of silicon-bonded hydroxyl groups;

(F) 0 to about 40 parts of filler;

(G) from about 0 to about 5 parts of a beta-diketone having the general formula:

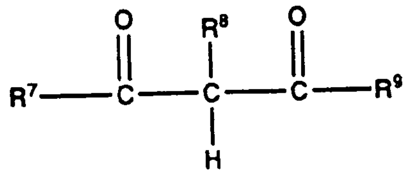

wherein $R^7$, $R^8$, and $R^9$ are as previously defined;
and

(H) 0 to about 10 parts of a polyalkoxy silane crosslinking agent.

Detailed Description of the Invention

Component (A) of the composition of the present invention is a diorganopolysiloxane polymer terminated at each end of the polymer chain by at least two alkoxy radicals and having a viscosity varying from about 100 to about 1,000,000 centipoise at 25°C and preferably from about 5000 to about 200,000 centipoise at 25°C. The organic group of the polymer is a $C_{1-15}$ monovalent hydrocarbon radical.

Preferably, the polymer constituting component (A) has the general formula:

(I)

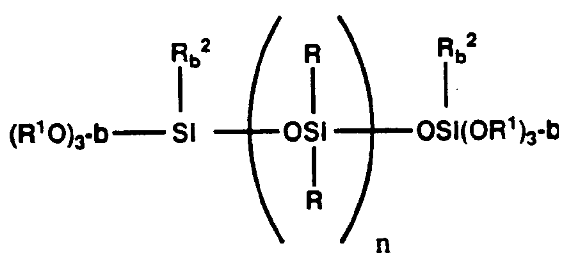

wherein each R and $R^2$ is independently a substituted or unsubstituted $C_{(1-15)}$ monovalent hydrocarbon radical, $R^1$ is a $C_{(1-8)}$ aliphatic organic radical selected from alkyl radicals, alkyl ether radicals, alkylester radicals, alkylketone radicals, alkylcyano radicals, or a $C_{(7-13)}$ aralkyl radical; n is a whole number ranging from about 50 to about 2500, and b is a whole number which is either 0 or 1.

In formula (I), R is preferably selected from $C_{(1-13)}$ monovalent hydrocarbon radicals, halogenated hydrocarbon radicals, and cyano alkyl radicals; $R^1$ is preferably a $C_{(1-8)}$ alkyl radical or a $C_{(7-13)}$ aralkyl radical; and $R^2$ is preferably methyl, phenyl, or vinyl. Most preferably, R, $R^1$, and $R^2$ are each methyl.

The terminal silicon atom in the polymer of component (A) must have at least two alkoxy groups and can have as many as three alkoxy groups in accordance with the above description.

The polyalkoxy-terminated organopolysiloxane of formula (I) can be made by various procedures. One procedure is taught by Cooper et al., U.S. Patent No. 3,542,901, involving the use of a polyalkoxysilane with a silanol-terminated polydiorganosiloxane in the presence of an amine catalyst.

The polymer of formula (I) is preferably produced according to the method described in U.S. Patent No. 4,515,932 to Chung, which is hereby incorporated by reference herein. In the Chung method, the polymer is prepared by reacting a silanol terminated diorganopolysiloxane polymer having a viscosity in the range of 100 to 1,000,000 centipoise at 25°C where the organic group is a monovalent hydrocarbon group with a polyalkoxy crosslinking agent of the formula

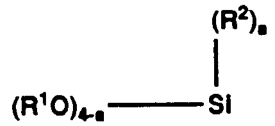

in the presence of an end-coupling catalyst where $R^1$, $R^2$ and "a" are as previously defined.

The silanol terminated polymer used in preparing the polymer of formula (I) according to the Chung method preferably has the formula:

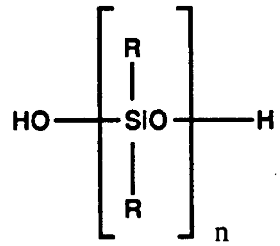

where R and "n" are as previously defined.

The end-coupling reaction wherein the polymer of formula (I) is formed according to the Chung method is carried out by mixing the alkoxy silane with the silanol terminated diorganopolysiloxane polymer or polymers in the presence of an end-coupling catalyst selected from the class consisting of Bronsted acids, Lewis acids, stearic acid treated calcium carbonate, and amines and mixtures thereof. The amines can be either primary, secondary, or tertiary amines. The more basic the amine the better it is as a catalyst. The most preferred catalyst is one of the acids indicated above and most preferably is a combination of one of the acids with an amine. After end-coupling is complete, a silazane (for example, hexamethyldisilazane) is added to quench the amine salt catalyst, providing a shelf-stable polymer. For more information as to such catalysts and the end-coupling reactions one is referred to the disclosure of Chung, U.S. Patent No. 4,515,932, which was previously incorporated by reference herein.

Component (B) is a diorganotin-bis-diketonate condensation catalyst of the general formula:

(II)

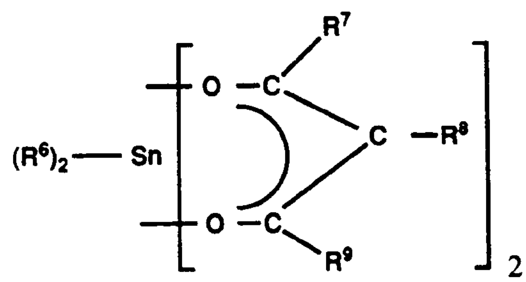

wherein $R^6$ is selected from $C_{(1-18)}$ monovalent hydrocarbon radicals and substituted monovalent hydrocarbon radicals, and $R^7$, $R^8$, and $R^9$ are the same or different monovalent radicals selected from the class consisting of hydrogen, $R^6$, $OR^6$, $-Si(R^6)_3$, $-OSi(R^6)_3$ aryl, acyl, and nitrile.

Radicals included within $R^6$ of formula (I) are, for example, $C_{(6-13)}$ aryl radicals and halogenated aryl radicals, such as phenyl, tolyl, chlorophenyl, naphthyl; $C_{(1-18)}$ aliphatic, cycloaliphatic radicals, and halogenated derivatives thereof, for example, cyclohexyl, cyclobutyl; alkyl and alkenyl radicals, such as methyl, ethyl, propyl, chloropropyl, butyl, pentyl, hexyl, heptyl, octyl, vinyl, allyl, and trifluoropropyl.

Some of the tin condensation catalysts included within formula (II) are, for example:

Di(n-butyl)tinbis(acetylacetonate);
Di(n-butyl)tinbis(benzoylacetonate):
Di(ethyl)tinbis(lauroylacetonate);
Di(methyl)tinbis(pivaloylacetonate);
Di(n-octyl)tinbis(acetylacetonate);

Di(n-propyl)tinbis(1,1,1-trifluoroacetylacetonate);
Di(n-butyl)tinbis(ethylacetoacetate); and
Di(n-butyl)tin(acetylacetonate)(ethylacetoacetate).

The preferred tin catalyst for use in the present invention is di(n-butyl)tinbis(acetylacetonate).

Effective amounts of the condensation catalyst to facilitate the cure of the RTV compositions are, for example, from about 0.01 to about 2.0, preferably from about 0.1 to about 1.0, and most preferably from about 0.2 to about 0.4, parts by weight per 100 parts of the alkoxy-functional polydiorganosiloxane (A).

Component (C) is a cyano-functional polyalkoxy silane having the general formula:

(III)

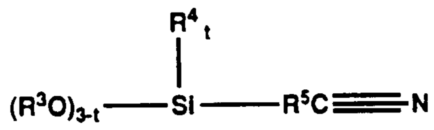

wherein each $R^3$ and $R^4$ is independently a monovalent hydrocarbon or substituted hydrocarbon radical having from 1 to about 18 carbon atoms, $R^5$ is a $C_{(2-12)}$ divalent hydrocarbon radical, and "t" is a number ranging from about 0 to about 3.

In the compound of formula (III), $R^3$ and $R^4$ can be alkyl radicals, e.g., methyl, ethyl, propyl, and the like; alkenyl radicals, e.g., vinyl, allyl, and the like; cycloalkyl radicals, e.g., cyclohexyl, cycloheptyl, and the like; mononuclear aryl radicals, e.g., methyl-phenyl and the like; and fluoroalkyl radicals, e.g., 3,3,3-trifluoropropyl. Preferably, $R^3$ and $R^4$ are preferably selected from methyl or ethyl, and most preferably are both methyl. $R^5$ is preferably an alkylene or arylene substituted or unsubstituted divalent hydrocarbon radical of 2-12 carbon atoms and more preferably from 2-8 carbon atoms.

A preferred specific compound within the scope of formula (III) above is beta-cyanoethyltrimethoxysilane. Other specific compounds include

gamma-(cyanoethoxy)-3-methylbutenyltrimethoxysilane
3-(cyanoethoxy)-3-methylbutenyltrimethoxysilane
beta-cyanoethylmethyldimethoxysilane
beta-cyanoethyltrimethoxysilane
2-cyanoethylmethyldiethoxysilane
3-cyanopropyltriethoxysilane
cyanopropylmethyldimethoxysilane
1-cyanoethyltris(methoxyethoxy)silane.

Methods for preparing the compounds within the scope of formula (III) are disclosed, for example, in U.S. Patent Nos. 4,483,973 and 4,528,353, both to Lucas et al., which are both hereby incorporated by reference herein. These compounds can be prepared by reacting an olefinic cyanide with a trichlorohydride silane in the presence of a platinum catalyst to produce the desired intermediate and then alkoxylating this intermediate so as to produce the cyano-functional alkoxysilane. Accordingly, one specific type of reaction could be, for instance, allyl cyanide reacted with trichlorosilane. In this reaction, the chlorosilane is reacted with the cyanide, otherwise, since the methoxy group will react with the cyanide group to lower the yield of the desired product if the methoxylated intermediate is used in the addition reaction with the platinum catalyst.

The preferred cyano-functional polyalkoxy silane for use as component (C) in the composition of this invention is cyanoalkyltrialkoxysilane and most preferably cyanoethyltrimethoxysilane.

Component (C) is present in the composition of this invention in an amount ranging from about 0.1 to about 3, preferably from about 0.3 to about 1.0, and most preferably from about 0.3 to about 0.7, part by weight based on the weight of the total composition.

Component (D) is an isocyanato-functional alkoxysilane co-adhesion promoter having the formula:

(IV)

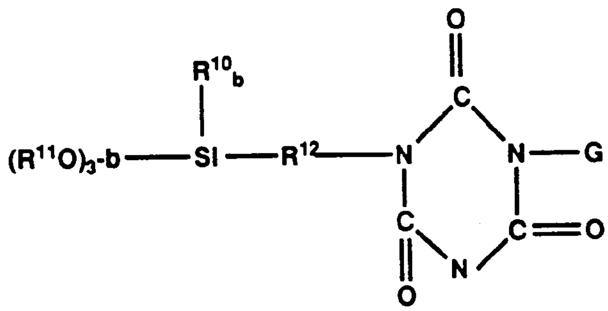

wherein G is selected from $R^{10}$ radicals, radicals of the formula

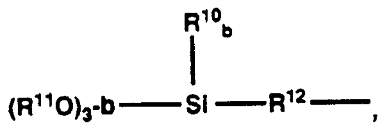

styryl, vinyl, allyl, chloroallyl, and cyclohexenyl radicals, where $R^{10}$ is a $C_{1-8}$ monovalent hydrocarbon radical or cyanoalkyl radical, $R^{11}$ is a $C_{1-8}$ monovalent hydrocarbon radical or cyanoalkyl radical, $R^{12}$ is a $C_{2-12}$ divalent hydrocarbon radical selected from alkylenearylene, alkylene, and cycloalkylene and halogenated alkylenearylene, alkylene and cycloalkylene and where b varies from 0 to 3.

For more information as to such compounds, one is referred to the disclosure of Beers, U.S. Patent No. 4,100,129, Berger, U.S. Patent No. 3,821,218, and Lucas et al., U.S. Patent Nos. 4,483,973 and 4,528,353, which are hereby incorporated by reference herein.

The most preferred adhesion promoters within formula (III) are 1,3,5-tristrimethoxysilylpropylisocyanate and bis-1,3-trimethoxysilylpropylisocyanurate. Such compounds are prepared by taking the corresponding alkoxy hydride silane and reacting it with the unsaturated isocyanurate or cyanurate in the presence of a platinum catalyst whereupon the hydride adds on to the unsaturated group such as the allyl group of the isocyanurate nucleus. The radical $R^{12}$ can be selected from any divalent hydrocarbon radical substituted or unsubstituted so long as it does not interfere with the adhesion promoter activities of the compound. It should be noted that highly complicated compounds are not desired as they are more difficult and thus more expensive to prepare and obtain. Other specific compounds within the scope of formula (IV) above are as follows:

1,3,5-tristrimethoxysilylpropylisocyanurate
1,3,5-tristrimethoxysilylethylisocyanurate
1,3,5-trismethyldimethoxysilylpropylisocyanurate
1,3,5-trismethyldiethoxysilylpropylisocyanurate

The isocyanato-functional alkoxysilane co-adhesion promoter is typically present in the RTV compositions of this invention in an amount within the range of from about 0.1 to about 2.0, preferably from about 0.2 to about 1.0, and most preferably from about 0.3 to about 0.7, part by weight per 100 parts of the alkoxy-functional polydiorganosiloxane (A).

Component (E) is a polysiloxane plasticizing fluid comprising by weight:

(i) from 5 to 60 mole percent of monoalkylsiloxy units having the formula

$$(V) \qquad R^{13}SiO_{3/2}$$

or siloxy units of the formula

$$(VI) \qquad SiO_{4/2}$$

or a mixture of such units;

(ii) from 1 to 6 mole percent of trialkylsiloxy units having the formula

$$(VII) \qquad (R^{13})_3SiO_{1/2};$$

(iii) from 34 to 94 mole percent of dialkylsiloxy units having the formula

$$(VIII) \qquad (R^{13})_2SiO_{2/2};$$

wherein $R^{13}$ is a substituted or unsubstituted hydrocarbon radical containing from about 1 to about 13 carbon atoms, the polysiloxane containing from about 0.1 to about 2% by weight of silicon-bonded hydroxyl groups.

In formulas (V)-(VIII), $R^{13}$ is preferably methyl.

The polysiloxane fluid (MDT fluid) is present in the composition of the present invention in an amount ranging from about 1 to about 50, preferably from about 5 to about 40, and most preferably from about 10 to about 30, parts per 100 parts of the polyalkoxy-terminated polydiorganosiloxane (A).

The MDT fluid can be prepared by co-hydrolyzing a blend of methyl mono-, di-, and trichlorosilanes by a continuous hydrolysis process.

Preferably, the RTV composition of this invention further contains filler (Component (F)). Various fillers can be incorporated into the composition of the present invention such as, for example, titanium dioxide, zirconium silicate, silica aerogel, iron oxide, diatomaceous earth, fumed silica, carbon black, precipitated silica, glass fibers, polyvinyl chloride, ground quartz, calcium carbonate, and the like. The preferred filler for use in the composition of this invention is reinforcing filler and most preferably fumed silica filler.

The amount of filler used can vary within wide limits in accordance with the intended use. For example, in some sealant applications, the curable compositions of the present invention can be used free of filler. In other applications, such as employment of the curable compositions for making binding material, as much as 700 parts or more of filler per 100 parts by weight of the alkoxy-terminated polydiorganosiloxane (A).

The compositions of the present invention also can be used as construction sealants and caulking compounds. The exact amount of filler, therefore, will depend upon such factors as the application for which the composition is intended and the type of filler used. Preferably, from about 5 to about 300 parts of filler, which can include up to about 40 parts, and preferably from about 5 to about 40 parts, of reinforcing filler, such as fumed silica filler, per 100 parts of organopolysiloxane (A) is used.

It is frequently advantageous to pretreat a silica filler with an activating agent such as octamethylcyclotetrasiloxane.

In preferred embodiments, the RTV compositions of this invention further contain a beta-diketone (component (G)) capable of chelating with the tin condensation catalyst of formula (II). The beta-diketone, hereinafter referred to as "the chelating ligand", has been found to impart improved shelf stability to the RTV composition when used in effective amounts. The chelating ligand useful in this invention has the general formula:

(IX)

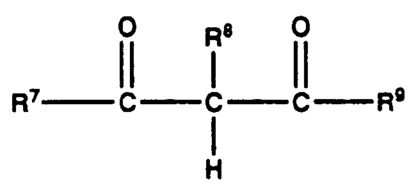

wherein $R^7$, $R^8$, and $R^9$ are as previously defined.

From a cost and availability standpoint, the preferred chelating ligand is 2,4-pentanedione. However, the Environmental Protection Agency has recently issued a Significant New Use Rule (SNUR) covering 2,4-pentanedione which labels it a potential neurotoxin, mutagen, and developmentally toxic by inhalation. The SNUR essentially prohibits the use of 2,4-pentanedione in any new consumer product, thus greatly restricting the marketability of RTV sealants containing it. Other, relatively non-toxic beta-diketones can be used in place of 2,4-pentanedione. Examples of these include 2,2,6,6-tetramethyl-3,5-heptanedione, 1,1,1-trifluoro-2,4-pentanedione, 1-phenyl-1,3-butanedione, 2,4-hexanedione, and 5,7-nonanedione. The most preferred of these non-toxic beta-diketones is 2,4-hexanedione.

The chelating ligand can be present in the RTV compositions of this invention in an amount within the range of from about 0 to about 5, preferably from about 0.2 to about 0.8, and most preferably from about 0.3 to about 0.5, part by weight per 100 parts of the alkoxy-functional polydiorganosiloxane (A).

The RTV composition of this invention can further contain from a polyalkoxy crosslinking agent (Component (G)) of the general formula:

(X)

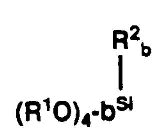

wherein $R^1$, $R^2$, and b are as defined previously herein.

Illustrative compounds represented by formula (X above include methyltrimethoxysilane, methyltriethoxysilane, ethyltrimethoxysilane, tetraethoxysilane, and vinyltrimethoxysilane. Methyltrimethoxysilane is preferred.

The polyalkoxy crosslinking agent is typically present in the RTV compositions of this invention in an amount within the range of from about 0 to about 20, preferably from about 0.1 to about 2, and most preferably from about 0.5 to about 1.0, parts by weight per 100 parts of the alkoxy-functional polydiorganosiloxane of formula (X).

The composition of the present invention may further contain from about 1 to about 50 parts by weight of a triorganosilyl endstopped diorganopolysiloxane (I) having a viscosity of from 10 to 5000 centipoise at 25°C., where the organo groups are monovalent hydrocarbon radicals, preferably of from 1 to 8 carbon atoms. Such linear diorganopolysiloxane polymers are useful as plasticizers. Preferably, such plasticizers are free of silanol groups but usually there is present up to about 500 ppm of silanol groups. It is also preferable that the organo substituent groups are methyl and that the viscosity range from 10 to 1000 centipoise at 25°C.

Other compounds, for example, flame retardants such as platinum, may also be included in the composition of the present invention.

The RTV compositions of the present invention may be prepared by methods known in the art. For example, they may be prepared by mixing all the ingredients together at the same time. Preferably, they are prepared by rigorously blending a mixture of the polyalkoxy-terminated polymer, the cyano-functional polyalkoxy silane, and filler. Afterwards, the crosslinker, tin catalyst, stabilizer/scavenger, adhesion promoter, and other ingredients, e.g., plasticizer, are added separately or together, followed by thorough mixing under anhydrous conditions.

The RTV compositions may be coated on a variety of substrates, particularly masonry substrates. Examples of suitable substrates include aluminum, glass, polyacrylate, polycarbonate, polyvinylchloride, and concrete.

The Examples given below are provided for the purpose of illustrating the present invention. They are not given for any purpose of setting limits or boundaries to the instant invention. All parts in the Examples are by weight.

## Experimental

### Example 1

A methyldimethoxysilyl-terminated polydimethylsilicone polymer was prepared as follows. The materials listed below were mixed:

Hydroxy-terminated polydimethylsilicone polymer having a viscosity of 110,000 centipoise at 25°C - 100 parts

methyltrimethoxysilane - 2.0 parts

diisobutylamine - 0.60 parts

formic acid - 0.20 parts

The mixture was heated for 3.0 hours at 110°C under a nitrogen atmosphere. At this time, the silicone polymer was found by Si FTNMR analysis to be endcapped with $CH_3(CH_3O)_2Si$- groups. The polymer had a viscosity of 130,000 centipoise at 25°C after endcapping.

Examples 2-6 below compare the effects on primerless (i.e., peel) adhesion properties of a one-component RTV silicone composition resulting from the combination of the cyano-functional and isocyanato-functional polyalkoxysilane adhesion promoting agents and the use of each of these adhesion promoters alone. Furthermore, Examples 2 and 7 illustrate the effect on peel adhesion resulting from the omission of MDT oil from the RTV composition.

The compositions prepared in Examples 2-6 were tested for primerless peel adhesion per WPSTM C-128 on aluminum, glass, polyacrylate, polycarbonate, polyvinylchloride, and concrete after the RTV compositions were cured for14 days at 72°C and 50% relative humidity and after the RTV compositions were cured for 14 days followed by a 7 day water immersion. The results are shown in Table 1.

### Example 2

Example 2 illustrates the continuous preparation of the composition of this invention using a 30 mm Werner-Pfleiderer twin-screw extruder.

To barrel 1 of the extruder there was continuously added 16 parts of fumed silica which had been treated with octamethylcyclotetrasiloxane ($D_4$). To barrel 1 there was also continuously added 1.50 parts of cyanoethyltrimethoxysilane. To barrel 8 of the extruder there was continuously added 30 parts of a $(CH_3)_3SiO$-stopped silicone plasticizing fluid having a viscosity of 100 centipoise at 25°C. and 10 parts of an MDT oil. To barrel 12 there was added 1.1 parts of 1,3,5-tris(3-trimethoxysilylpropyl)isocyanurate, 0.45 parts of dibutyltin-bis-acetylacetonate cure catalyst, 0.45 parts of 2,4-pentanedione chelating ligand, and 1.50 parts of methyltrimethoxysilane. The Werner-Pfleiderer twin-screw extruder was maintained at a temperature of 75°C. A de-airing vacuum was applied at barrel 11 of the extruder. RTV sealant was produced at a rate of 30 pounds/hour.

Example 3

The procedure followed in Example 2 was repeated except that the cyanoethyltrimethoxysilane was omitted. In Example 3, 1,3,5-tris(3-trimethoxysilylpropyl)isocyanurate (at 1.1 parts) was the sole adhesion promoter.

Example 4

The procedure followed in Example 2 was repeated except that the 1,3,5-tris(3-trimethoxysilylpropyl)isocyanurate was omitted. In Example 4, cyanoethyltrimethoxysilane (at 1.50 parts) was the sole adhesion promoter.

Example 5

The procedure followed in Example 2 was repeated except that the cyanoethyltrimethoxysilane was omitted. In Example 4, 1,3,5-tris(3-trimethoxysilylpropyl)isocyanurate (at 2.2 parts) was the sole adhesion promoter.

Example 6

The procedure followed in Example 2 was repeated except that the 1,3,5-tris(3-trimethoxysilylpropyl)isocyanurate was omitted. In Example 6, cyanoethyltrimethoxysilane (at 2.2 parts) was the sole adhesion promoter.

In Table 1 below, the term (AMB) refers to 14 day cure at 72°C and 50% relative humidity. The term (WET) refers to 14 day cure at 72°C and 50% relative humidity followed by a 7 day water immersion. The term "ANOD. ALUM." refers to anodized aluminum and "PVC" refers to polyvinyl chloride. "PPI" refers to pounds per inch and "%COH. FAIL" refers to percent cohesive failure.

TABLE 1

Peel Adhesion Results

| Substrate | Example 2 ppi/ %coh. fail. | Example 3 ppi/ %coh. fail. | Example 4 ppi/ %coh. fail. | Example 5 ppi/ %coh. fail. | Example 6 ppi/ %coh. fail. |
|---|---|---|---|---|---|
| Glass (Amb) | 50/100 | 15/100 | 23/100 | 15/100 | 20/100 |
| Glass (Wet) | 35/100 | 17/100 | 15/100 | 10/100 | 15/100 |
| Anod. Alum. (Amb) | 26/90 | 8/0 | 6/0 | 5/0 | 10/0 |
| Anod. Alum. (Wet) | 28/40 | 0/0 | 0/0 | 0/0 | 5/0 |
| Mill Fin. Alum. (Amb) | 46/100 | 9/0 | 6/0 | 5/0 | 5/0 |
| Mill Fin. Alum. (Wet) | 30/10 | 0/0 | 0/0 | 0/0 | 0/0 |
| Duranar (Amb) | 42/100 | 5/0 | 0/0 | 0/0 | 5/0 |
| Duranar (Wet) | 26/90 | 0/0 | 0/0 | 0/0 | 0/0 |
| Concrete (Amb) | 32/20 | 22/100 | 10/0 | 25/100 | 15/50 |
| Concrete (Wet) | 25/20 | 20/100 | 0/0 | 20/100 | 10/0 |
| Polycarbonate (Amb) | 34/100 | 19/0 | 5/0 | 15/50 | 10/0 |
| Polycarbonate (Wet) | 36/100 | 10/0 | 0/0 | 10/0 | 0/0 |
| Ridgid PVC (Amb) | 45/100 | 15/0 | 5/0 | 15/50 | 10/0 |
| Ridgid PVC (Wet) | 38/100 | 0/0 | 0/0 | 0/0 | 0/0 |
| Polyacrylate (Amb) | 50/100 | 10/0 | 5/0 | 15/50 | 5/0 |
| Polyacrylate (Amb) | 30/100 | 0/0 | 0/0 | 0/0 | 0/0 |

The data shown in Table 1 indicates that the use of both cyano-functional and isocyanato-functional polyalkoxysilane adhesion promoting agents provides RTV silicone rubber compositions with improved primerless adhesion properties compared to RTV compositions containing either cyano-functional or isocyanato-functional polyalkoxysilane as the sole adhesion promoter.

Example 7

Example 2 was repeated except that 30 parts of "M" (i.e., $(CH_3)_3SiO_{1/2}$) stopped polydimethylsilicone fluid having a viscosity of 100 centipoise at 25°C. was used and 0 parts of MDT fluid was used. Peel adhesion results are shown in Table 2.

TABLE 2

Example 7: Peel Adhesion Results

| Substrate | Example 7 PPI/%COH.FAIL> |
|---|---|
| GLASS (AMD) | 9/0 |
| GLASS (WET) | 0/0 |
| ANOD. ALUM. (AMB) | 7/0 |
| ANOD. ALUM. (WET) | 0/0 |
| MILL FIN. ALUM. (AMB) | 22/0 |
| DURANAR (AMB) | 15/0 |
| DURANAR (WET) | 0/0 |
| CONCRETE (AMB) | 18/20 |
| CONCRETE (WET) | 8/0 |
| POLYCARBONATE (AMB) | 21/50 |
| POLYCARBONATE (WET) | 0/0 |
| RIDGID PVC (AMB) | 15/0 |
| RIDGID PVC (WET) | 0/0 |
| POLYACRYLATE (AMB) | 0/0 |
| POLYACRYLATE (WET) | 0/0 |

## Claims

1. A one-component room temperature vulcanizable silicone composition having improved primerless adhesion properties, comprising by weight:

(A) 100 parts of an polydiorganosiloxane having a viscosity of from about 100 to about 1,000,000 centipoise at 25°C, wherein the silicon atoms at each polymer chain end is terminated with at least two alkoxy radicals;

(B) an effective amount of a diorganotin bis beta-diketonate condensation catalyst having the general formula:

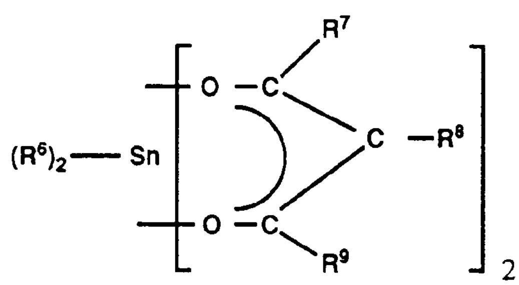

wherein $R^6$ is selected from $C_{(1-18)}$ monovalent hydrocarbon radicals and substituted monovalent hydrocarbon radicals, and $R^7$, $R^8$, and $R^9$ are the same or different monovalent radicals selected from the class consisting of hydrogen, $R^6$, $OR^6$, $-Si(R^6)_3$, $-OSi(R_6)_3$, aryl, acyl, and nitrile;

(C) from about 0.1 to about 3 parts of a cyano-functional polyalkoxy silane having the formula:

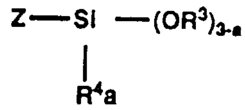

wherein each $R^3$ and $R^4$ is independently a monovalent hydrocarbon or substituted hydrocarbon radicals having from 1 to about 18 carbon atoms, "a" is a number ranging from about 0 to about 2, and Z is a saturated, unsaturated or aromatic cyano-functionalized hydrocarbon radical; and

(D) from about 0.1 to about 2.0 parts of an isocyanato-functional alkoxysilane having the formula:

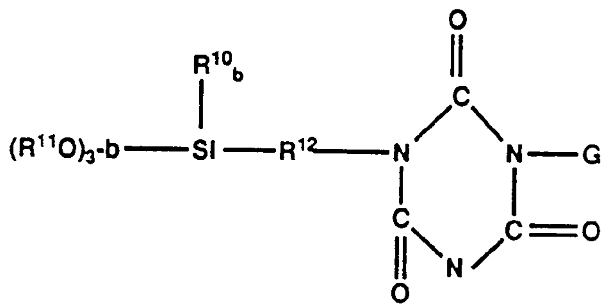

wherein G is selected from $R^{10}$ radicals, radicals of the formula

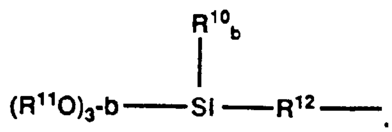

styryl, vinyl, allyl, chloroallyl, and cyclohexenyl radicals, where $R^{10}$ is a $C_{1-8}$ monovalent hydrocarbon radical or cyanoalkyl radical, $R^1$ is a $C_{1-8}$ monovalent hydrocarbon radical or cyanoalkyl radical, $R^{12}$ is a $C_{2-12}$ divalent hydrocarbon radical selected from alkylenearylene, alkylene, and cycloalkylene and halogenated alkylenearylene, alkylene and cycloalkylene and where b varies from 0 to 3;

(E) from about 1 to about 50 parts of a polysiloxane plasticizing fluid comprising by weight:

(i) from 5 to 60 mole percent of monoalkylsiloxy units having the formula

$$R^{13}SiO_{3/2}$$

or siloxy units of the formula

$$SiO_{4/2};$$

or a mixture of such units;

(ii) from 1 to 6 mole percent of trialkylsiloxy units having the formula

$$(R^{13})_3SiO_{1/2};$$

(iii) from 34 to 94 mole percent of dialkylsiloxy units having the formula

$$(R^{13})_2SiO_{2/2};$$

wherein $R^{13}$ is a substituted or unsubstituted hydrocarbon radical containing from about 1 to about 13 carbon atoms, the polysiloxane containing from about 0.1 to about 2% by weight of silicon-bonded hydroxyl groups;

(F) 0 to about 40 parts of filler;

(G) from about 0 to about 5 parts of a beta-diketone having the general formula:

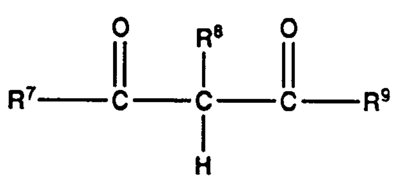

wherein $R^7$, $R^8$, and $R^9$ are as previously defined;

and
(H) 0 to about 10 parts of a polyalkoxy silane crosslinking agent.

2. A room temperature vulcanizable composition according to claim 1 wherein the polydiorganosiloxane has the general formula:

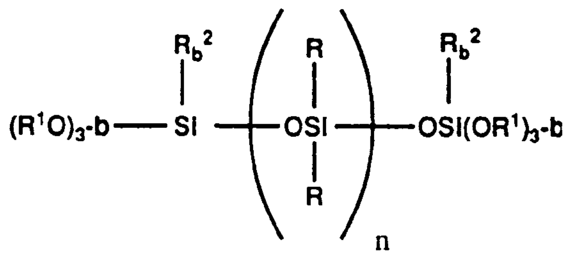

wherein each R and $R^2$ is independently a substituted or unsubstituted $C_{(1-15)}$ monovalent hydrocarbon radical, $R^1$ is a $C_{(1-8)}$ aliphatic organic radical selected from alkyl radicals, alkyl ether radicals, alkylester radicals, alkylketone radicals, alkylcyano radicals, or a $C_{(7-13)}$ aralkyl radical; n is a whole number ranging from about 50 to about 2500, and b is a whole number which is either 0 or 1.

3. A room temperature vulcanizable composition according to claim 1 wherein $R^{13}$ is methyl.

4. A room temperature vulcanizable composition according to claim 1 wherein the condensation catalyst is di(n-butyl)tinbis(acetylacetonate).

5. A room temperature vulcanizable composition according to claim 1 wherein the cyano-functional polyalkoxy silane is betacyanoethyltrimethoxysilane.

6. A room temperature vulcanizable composition according to claim 1 wherein the isocyanato-functional polyalkoxy silane is 1,3,5-tristrimethoxysilylpropylisocyanate or bis-1,3-trimethoxysilylpropylisocyanurate.

7. A room temperature vulcanizable composition according to claim 1 wherein the polyalkoxy silane crosslinking agent is methyltrimethoxysilane.

8. A room temperature vulcanizable composition according to claim 1 wherein the filler is a reinforcing filler.

9. A room temperature vulcanizable composition according to claim 1 wherein the beta-diketone is present in an amount ranging from about 0.2 to about 0.8 part.

10. A room temperature vulcanizable composition according to claim 1 wherein the cyano-functional polyalkoxy silane is present in an amount ranging from about 0.3 to about 1 part by weight and the isocyanato-functional polyalkoxy silane is present in an amount ranging from about 0.2 to about 1 part by weight.

11. A shelf stable, one-component room temperature vulcanizable silicone composition having improved primerless adhesion properties, comprising by weight:
(A) 100 parts of an polydiorganosiloxane having the formula

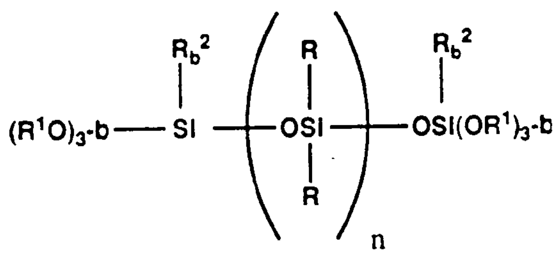

wherein each R, $R^1$, and $R^2$ is a methyl radical; n is a whole number ranging from about 50 to about 2500, and b is a whole number which is either 0 or 1.
(B) from about 0.2 to about 0.4 parts of di(n-butyl)tinbis-(acetylacetonate);
(C) from about 0.3 to about 0.7 part of beta-cyanoethyltrimethoxysilane;
(D) from about 0.3 to about 0.7 part of a 1,3,5-tristrimethoxysilylpropylisocyanate;
(E) from about 10 to about 30 parts of a polysiloxane plasticizing fluid comprising by weight:
(i) from 5 to 60 mole percent of monoalkylsiloxy units having the formula

$$R^{13}SiO_{3/2}$$

or siloxy units of the formula

$$SiO_{4/2}$$

or a mixture of such units;
(ii) from 1 to 6 mole percent of trialkylsiloxy units having the formula

$$(R^{13})_3SiO_{1/2};$$

(iii) from 34 to 94 mole percent of dialkylsiloxy units having the formula

$$(R^{13})_2SiO_{2/2};$$

wherein $R^{13}$ is a methyl group, the polysiloxane containing from about 0.1 to about 2% by weight of silicon-bonded hydroxyl groups;
(F) from about 5 to about 40 parts of fumed silica filler;
(G) from about 0.3 to about 0.5 parts of 2,4-hexanedione; and
(H) from about 0.5 to about 1.0 part of methyltrimethoxysilane

European Patent Office

# EUROPEAN SEARCH REPORT

Application Number

EP 91 31 1106

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 521 574 (GENERAL ELECTRIC) * Page 9, lines 1-7; page 11, lines 14-17; claim 1 * --- | 1-11 | C 08 K 5/57<br>C 08 K 5/07<br>C 08 K 5/54<br>C 08 L 83/04 |
| Y | EP-A-0 304 701 (GENERAL ELECTRIC) * Claims 14,15,20 * & US-A-4 863 992 (Cat. D) --- | 1-11 | |
| Y | EP-A-0 235 049 (RHONE-POULENC) * Page 22, lines 21-25; page 23, lines 4-5; page 29, lines 24-31; page 39, lines 20-35; claim 1 * ----- | 1-11 | |
| | | | TECHNICAL FIELDS SEARCHED (Int. Cl.5) |
| | | | C 08 K<br>C 08 L |

The present search report has been drawn up for all claims

| Place of search | Date of completion of the search | Examiner |
|---|---|---|
| THE HAGUE | 05-03-1992 | LENTZ J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)